# EUROPÄISCHE PATENTSCHRIFT

(11) **EP 1 093 234 B1**
(45) Veröffentlichungstag und Bekanntmachung des Hinweises auf die Patenterteilung: **14.06.2006**
(21) Anmeldenummer: 00118561.0
(22) Anmeldetag: 26.08.2000
(51) Int. Cl.: H04B 1/38, H01Q 1/24, H04M 1/60

(54) **Verfahren und Anordnung zur Verminderung der Belastung eines Mobiltelefon-Benutzers durch elektromagnetische Strahlung im Funkwellenbereich**
Method and apparatus for reducing the rf radiation exposure of a mobile telephone user
Procédé et dispositif de réduction d'exposition aux rayonnements radiofréquence d'utilisateur de téléphones mobiles

(30) Priorität: 13.10.1999 DE 19949339
(43) Veröffentlichungstag der Anmeldung: 18.04.2001
(73) Patentinhaber: Deutsche Telekom AG, 53113 Bonn (DE)
(72) Erfinder: Lorenz, Manfred, 53129 Bonn (DE)
(74) Vertreter: Mierswa, Klaus

(56) Entgegenhaltungen:
- WO-A-98/26513
- DE-A- 19 629 408

## Beschreibung

### Technisches Gebiet:

Die Erfindung betrifft ein Verfahren und eine Anordnung zur Verminderung der Belastung eines Mobiltelefon-Benutzers in einem Aufenthaltsbereich, insbesondere einem Fahrzeug-Innenraum oder einem Gebäude-Innenraum, durch elektromagnetische Strahlung im Funkwellenbereich.

### Stand der Technik:

Schnurlose Mobiltelefone, sogenannte Handys, werden gegenwärtig zunehmend eingesetzt. Sprachinformationen und sonstige Daten werden dabei nicht über über Leitungen, das Telefon-Festnetz, in Form elektrischer Signale übertragen, sondern als Funksignal, welches von einem Sendeempfänger des Mobiltelefons erzeugt bzw. empfangen wird. Um das Funksignal über Entfernungen von einigen Kilometern zu einer Umsetzstation übertragen zu können, sind entsprechend hohe Sendeleistungen von bis zu einigen Watt notwendig. Ein Teil dieser Sendeleistung wird beim Betrieb des Mobiltelefons im Kopf des Benutzers als Wärme absorbiert, da die Antenne des Mobiltelefons in alle Raumrichtungen etwa gleich stark abstrahlt und sich im Anwendungsfall regelmäßig in unmittelbarer Nähe des Kopfes befindet. Ob und welche körperlichen Schäden diese Energiedeposition hervorrufen kann, ist derzeit nicht geklärt. Allerdings ist man bestrebt, die Energiebelastung so gering wie möglich zu halten.

Um ein Risiko zu vermindern bzw. entsprechenden Ängsten von Vieltelefonierern zu begegnen, wurde vorgeschlagen, das Mobiltelefon mit Abschirmvorrichtungen zu versehen, welche die elektromagnetische Strahlung vom Kopf des Benutzers abschirmen, die Sende- und Empfangsfunktion der Antenne in andere Raumrichtungen jedoch nicht beeinträchtigen. Beispielsweise sind auf die Antenne des Mobiltelefons aufsteckbare Schutzhülsen oder Schutzschilde vorgeschlagen worden. Problematisch bei diesen Abschirmvorrichtungen ist jedoch zum einen die nicht vollständige Abschirmung der Leistung vom Kopf des Benutzers, zum anderen die Beeinträchtigung der Sende- und Empfangsqualität, falls der Benutzer bzw. Abschirmvorrichtung und Antenne ungünstig relativ zur nächsten Umsetzstation positioniert sind.

Es ist zu beobachten, daß gerade Vieltelefonierer häufig aus denselben geschlossenen Innenräumen telefonieren, insbesondere aus ihrem Fahrzeug oder einem bestimmten Gebäude heraus. Der Erfindung soll gerade solche Benutzer von Mobiltelefonen vor erhöhter Strahlenbelastung durch elektromagnetische Wellen im Funkwellenbereich schützen.

Infrarot-Umsetzer, die drahtgebundene elektrische Signale über Infrarot-Schnittstellen umsetzen und als Infrarot-Signale abstrahlen und Infrarot-Empfängern drahtlos über eine gewisse Distanz zur Verfügung stellen, sind bekannt, beispielsweise in Lagerregalen.

Aus der DE 196 29 408 A1 ist eine Vorrichtung zur drahtlosen Kommunikation mit einem ein Handsprechgerät aufweisenden Mobiltelefon und mit einer Sende- und Empfangseinrichtung bekannt, welche jeweils am Handsprechgerät sowie an der Sende- und Empfangseinrichtung angeordnete Infrarot-Sende- und Empfangseinheit aufweist. Mit Hilfe dieser Vorrichtung kann die Belastung des Benutzers durch elektromagnetische Radiostrahlung im Kopfbereich im zeitlichen Mittel verringert werden.

### Technische Aufgabe:

Der Erfindung liegt daher die Aufgabe zugrunde, ein Verfahren sowie eine Anordnung zur Verminderung der Belastung eines Mobiltelefon-Benutzers durch elektromagnetische Strahlung im Funkwellenbereich zur Verfügung zu stellen, wobei sich der Benutzer in einem definierten Aufenthaltsbereich, z.B. einem Fahrzeug- oder einem Gebäude-Innenraum, befindet.

### Offenbarung der Erfindung:

Verfahrensmäßig ist die Lösung dieser Aufgabe dadurch gekennzeichnet, daß vom Mobiltelefon ausgesendete elektromagnetische Strahlung im Funkwellenbereich mittels eines ersten Funkwellen-Infrarot-Umsetzers in elektromagnetische Strahlung im Infrarotbereich umgesetzt und ansonsten abgeschirmt wird, und daß die vom ersten Funkwellen-Infrarot-Umsetzer ausgesendete Infrarot-Strahlung mittels eines zweiten Funkwellen-Infrarot-Umsetzers, der am Rand des Aufenthaltsbereichs angeordnet ist, in elektromagnetische Strahlung im Funkwellenbereich umgesetzt wird.

Der erste Funkwellen-Infrarot-Umsetzer ist dabei in geringem räumlichen Abstand zum Mobiltelefon angeordnet.

Vorrichtungsmäßig ist die Lösung der Aufgabe gekennzeichnet durch einen ersten Funkwellen-Infrarot-Umsetzer, der in räumlicher Nähe zum Mobiltelefon angeordnet ist und vom Sender des Mobiltelefons ausgesendete elektromagnetische Strahlung im Funkwellenbereich (Funksignale) zu empfangen und in Infrarot-Signale umzusetzen imstande ist, eine Abschirmeinrichtung, welche auf das Mobiltelefon aufsetzbar ist und Funksignale vom Mobiltelefon-Benutzer abzuschirmen imstande ist, und einen zweiten Funkwellen-Infrarot-Umsetzer, welcher am Rand des Aufenthaltsbereichs angeordnet ist und vom ersten Funkwellen-Infrarot-Umsetzer übertragene Infrarot-Signale zu empfangen und in Funksignale umzusetzen imstande ist. Dabei ist der erste Funkwellen-Infrarot-Umsetzer und/oder die Abschirmeinrichtung derart mit dem Mobiltelefon verbindbar, daß Infrarot-Signale zum zweiten Funkwellen-Infrarot-Umsetzer übertragbar sind.

Durch die Erfindung werden elektromagnetische Strahlen im Funkwellenbereich in räumlicher Nähe zum Kopf des Benutzers nahezu vollständig abgeschirmt. Die Datenübertragung in diesem räumlichen Bereich wird stattdessen über eine Infrarot-Übertragungsstrecke mit einem Infrarot-Signal vorgenommen, welches für den Benutzer unschädlich ist. Die Umsetzung des vom Mobiltelefon abgegebenen Funksignals in unmittelbarer räumlicher Nähe dazu in ein Infrarot-Signal hat zudem den Vorteil, daß auf eine erhöhte Sendeleistung verzichtet werden kann, da nur kleine Abstände überwunden werden müssen. Der Abstand zwischen Antenne des Mobiltelefons bzw. dessen Sender und den Empfänger des Funkwellen-Infrarot-Umsetzers kann sehr klein in der Größenordnung von Millimetern bis Zentimetern gewählt werden. Dadurch ist es möglich, das Mobiltelefon auch mit verminderter Sendeleistung zu betreiben, wodurch zusätzlich die Lebensdauer seiner Batterie bzw. des Akkus verlängert wird. Diese verminderte Sendeleistung kann zudem umso leichter vom Benutzer abgeschirmt werden; es ist weniger Abschirmmaterial notwendig.

Schließlich hat die Übertragung des Funksignals vom zweiten Umsetzer zu einer externen Umsetzstation den Vorteil, daß zum einen die Sendeleistung dieses Umsetzers abgeschirmt bzw. gerichtet ausgestrahlt werden kann und zum anderen eine erhebliche Reduktion der Sendeleistung, der der Benutzer ausgesetzt ist, bereits durch den räumlichen Abstand von erstem und zweitem Umsetzer erreicht wird.

Die Abschirmung wird mittels einer Abschirmvorrichtung vorgenommen, welche vorzugsweise auf das Mobiltelefon aufgesetzt wird und dieses ganz oder im Bereich der Antenne umschließt. Beispielsweise besteht die Abschirmvorrichtung aus einer Schutzumhüllung des Mobiltelefons, in deren Wandung der erste Funkwellen-Infrarot-Umsetzer angeordnet ist. Dieser enthält wenigstens einen Empfänger für Funksignale, einen Sender für Infrarot-Signale und Schaltungen zum Umsetzen der Funk- in Infrarot-Wellen, vorzugsweise jeweils auch Sender für Funk- und Empfänger für Infrarotsignale. Infrarotsender und -empfänger des ersten Umsetzers sind dabei so angeordnet, daß dieser nach außen Infrarotsignale senden bzw. von außen solche empfangen kann. Funkwellensender und -empfänger des ersten Umsetzers sind dagegen in den Innenraum der Abschirmvorrichtung gerichtet. Auf diese Weise dringen vorzugsweise keine Funksignale vom Mobiltelefon nach außen. Statt dessen wird das Funksignal in ein Infrarot-Signal umgesetzt, wobei der Informationsgehalt des Signals erhalten bleibt.

Die Infrarot-Wellen werden im Aufenthaltsbereich in direkter Linie über die Luft bzw. ein für diese Wellenlänge transparentes Übertragungsmedium zum zweiten Funkwellen-Infrator-Umsetzer übertragen. Denkbar ist dazu auch ein Lichtleitfaserkabel. Der zweite Umsetzer enthält einen Empfänger für Infrarot-Wellen sowie einen Sender für Funksignale. Der Sender für Funksignale strahlt hauptsächlich in den Bereich außerhalb des Aufenthaltsbereiches ab. Bei einem Fahrzeug oder einem geschlossenen Gebäude ist beispielsweise die diesem Sender zugehörige Antenne außerhalb des geschlossenen Raums, der den Aufenthaltsbereich bildet, angebracht. Bei einem Fahrzeug kann die Fahrzeugantenne mitbenutzt werden.

Selbst wenn der Sender des zweiten Funkwellen-Infrarot-Umsetzers teilweise zum Aufenthaltsbereich hin abstrahlt, so ist dieses unbedenklich, da die Intensität der Strahlung mit zunehmendem Abstand überproportional abfällt. Selbst bei einem Abstand von nur einem halben bis einem Meter gelingt es, die Strahlung, welcher der Benutzer ausgesetzt ist, um ein Vielfaches zu reduzieren. Der große Vorteil der Erfindung liegt jedoch darin, daß der zweite Funkwellen-Sender zum Benutzer beabstandet angeordnet und seine Position so gewählt werden kann, daß zudem eine Abschirmung durch dazwischenliegendes Material erreicht wird.

Da mit Abschirmung des Mobiltelefons auch die Empfangsleistung erheblich reduziert wird, wird die aus dem zweiten Funkwellen-Infrarot-Umsetzer bestehende Infrarot-Übertragungsstrecke vorzugsweise bidirektional betrieben.

Beide Funkwellen-Infrarot-Umsetzer weisen dazu jeweils Sende- und Empfangseinrichtungen für Funk- und Infrarotsignale auf. Ein Empfangssignal wird dann vom zweiten Funkwellen-Infrarot-Umsetzer empfangen, in ein Infrarot-Signal umgesetzt, zum ersten Funkwellen-Infrarot-Umsetzer übertragen und dort wieder in ein Funksignal umgewandelt, welches vom Mobiltelefon in gewohnter Weise empfangen wird.

Kurzbeschreibung der Zeichnung, wobei zeigen:
- Figur 1: eine Prinzipdarstellung eines Funkwellen-Infrarotumsetzers
- Figur 2: eine auf ein Mobiltelefon aufgesetzte Abschirmvorrichtung mit Funkwellen-Infrarotumsetzer
- Figur 3: eine Prinzipdarstellung eines statonären Funkwellen-Infrarotumsetzers
- Figur 4: eine erfindungsgemäße Anordnung zur Verminderung der Funkwellen-Abstrahlung innerhalb eines Automobil-Innenraums
- Figur 5: eine erfindungsgemäße Anordnung zur Verminderung der Funkwellen-Abstrahlung innerhalb eines Hauses

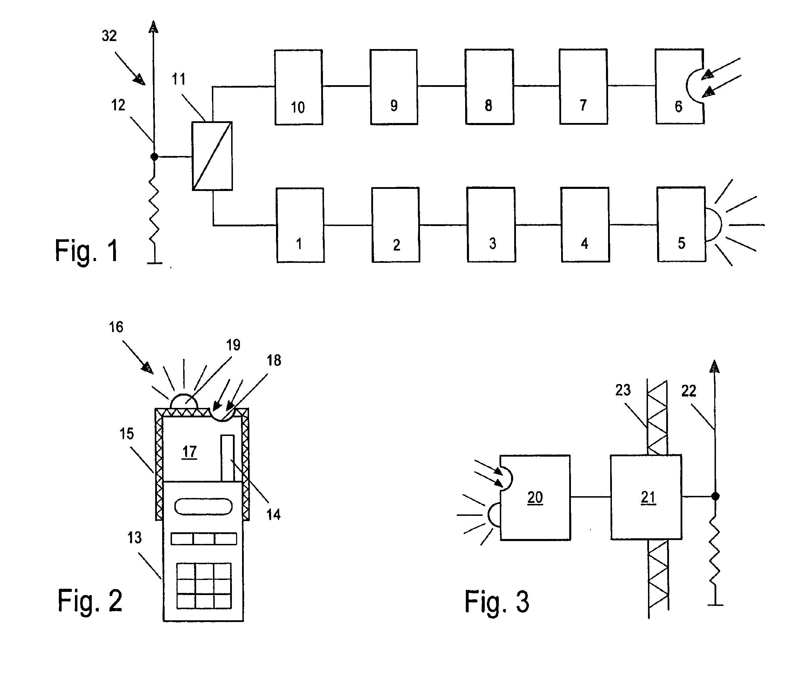

Figur 1 zeigt eine Prinzipdarstellung eines Funkwellen-Infrarotumsetzers 32 als Teil einer erfindungsgemäßen Anordnung (erster bzw. zweiter Funkwellen-Infrarotumsetzer). Der Umsetzer 32 weist eine Sende- und Empfangsantenne 12 für Funkwellen auf. Ein Funksignal wird von der Antenne 12 empfangen und über eine Sende- und Empfangsweiche 11 dem Funkempfänger 1 zugeleitet. In der Signalaufbereitungs- und Steuereinheit 2 wird das demodulierte Signal aufbereitet und die Gesprächssteuerung durchgeführt. Die Ausgangssignale der Einheit 2 werden dem Modulator 3 zugeführt, der eine Umsetzung auf Frequenzen des Infrarotbereichs vornimmt. Im Treiber 4 wird das Signal verstärkt und an die Infrarot-Sendediode 5 gegeben. Mit den Signalen wird die IR-Sendediode 5 zur Aussendung von Infrarotsignalen veranlaßt, welche die gleichen Informationen wie das Funksignal enthalten. Auf diese Weise gelingt die Umsetzung von eingehenden Funksignalen in Infrarotsignale (Empfangsweg).

Zur Realisierung der anderen Signalrichtung, d.h. zur Umsetzung von ausgehenden Infrarotsignalen in Funksignale (Sendeweg), ist des weiteren eine Infrarot-Empfangsdiode 6 vorgesehen. Empfangene IR-Signale werden von der Empfangsdiode 6 an den IR-Demodulator 7 gegeben. Dessen Ausgangssignale werden in einer Signalaufbereitungs- und Steuereinheit 8, welche auch mit der entsprechenden Signalaufbereitungs- und Steuereinheit 2 im Empfangsweg übereinstimmen kann, auf die genormten Werte gebracht. Des weiteren wird die Steuerung von Sende- und Empfangszustand ausgeführt. Über den Modulator 9 werden die Signale in den Funkfrequenzbereich umgesetzt und über den Sender bzw. Sendeverstärker 10 und die Weiche 11 der Antenne 12 zugeleitet und als Funkwelle abgestrahlt. Die Weiche 11 dient dazu, daß abzustrahlende Signale nicht in den Empfänger 1 gelangen, sondern zur Antenne 12. Die Entkopplung von gesendeten und empfangenen IR-Signalen wird von den Signalaufbereitungseinheiten 2 und 8 gesteuert. Zusätzliche Bauteile wie Stromversorgung sind nicht dargestellt.

Figur 2 zeigt eine auf ein Mobiltelefon 13 aufgesetzte Abschirmvorrichtung 15 mit Funkwellen-Infrarotumsetzer 16 als mobiles Teil der erfindungsgemäßen Anordnung. Die Abschirmvorrichtung 15 besteht aus einer Kappe, die auf das Mobiltelefon 13 aufgesetzt wird und auch dessen Antenne 14 mit abdeckt. Zwischen Mobiltelefon 13 und Abschirmvorrichtung 15 wird ein geschlossener Hohlraum 17 gebildet. Die Abschirmvorrichtung 15 besteht aus einem Material, welches elektromagnetische Strahlung im Funkwellenbereich stark dämpft, so daß die von der Antenne 14 ausgesendete Funkstrahlung den Hohlraum 17 nicht verläßt. In der Wandung der Abschirmvorrichtung 15 ist ein Funkwellen-Infrarotumsetzer 16, z.B. gemäß Figur 1, angeordnet zur zweikanaligen Umwandlung von Funksignalen in Infrarotsignale und umgekehrt. Ein von außen kommendes Infrarotsignal wird mittels einer außen angeordneten IR-Empfangsdiode 18 empfangen und in ein nach innen in den Hohlraum 17 abgestrahltes Funksignal umgesetzt. Dieses wird über die Antenne 14 empfangen und kann durch das Mobiltelefon weiterverarbeitet, z.B. als Sprachsignal ausgegeben werden.

Umgekehrt wird ein vom Mobiltelefon 13 über die Antenne 14 ausgesendetes Funksignal durch den innerhalb des Hohlraums 17 angeordneten Funk-Empfangsteil, insbesondere die Antenne 12 aus Figur 1, des Funkwellen-Infrarotumsetzer 16 empfangen und ansonsten durch die Abschirmvorrichtung 15 nach außen hin abgeschirmt. Das gemäß Figur 1 in den Infrarotbereich umgesetzte Signal wird mittels der IR-Sendediode 19 ausgesendet.

Figur 3 zeigt eine Prinzipdarstellung eines statonären Funkwellen-Infrarot-umsetzers 33 als stationäres Element einer erfindungsgemäßen Anordnung.

Der Umsetzer 33 weist eine Schnittstelle 20 zum Aussenden bzw. zum Empfang von Infrarotsignalen auf, welche eine Infrarot-Sendediode und eine Infrarot-Empfangsdiode umfaßt. Des weiteren ist als Schnittstelle zum Aussenden bzw. zum Empfang von Funksignalen eine Antenne 22 vorhanden. Die Schnittstelle 20 und die Antenne 22 sind über Umsetzer-Schaltkreise 21, z.B. gemäß Figur 1, verbunden, so daß einander Funksignale in Infrarotsignale mit im wesentlichen gleichem Informationsgehalt umgesetzt werden und umgekehrt. Die Schnittstelle 20 und die Antenne 22 sind räumlich so angeordnet, daß von der Antenne ausgesendete und empfangene Funksignale nicht in den räumlichen Bereich gelangen, in dem die IR-Signale ausgesendet und empfangen werden. Dieses ist hier durch eine Abschirmung für Funksignale 23 zwischen Schnittstelle 20 und Antenne 22 dargestellt. Beispielsweise ist die Antenne 22 außerhalb und die IR-Sende- und Empfangsdioden innerhalb des Raums angeordnet, der funkwellenfrei gehalten werden soll.

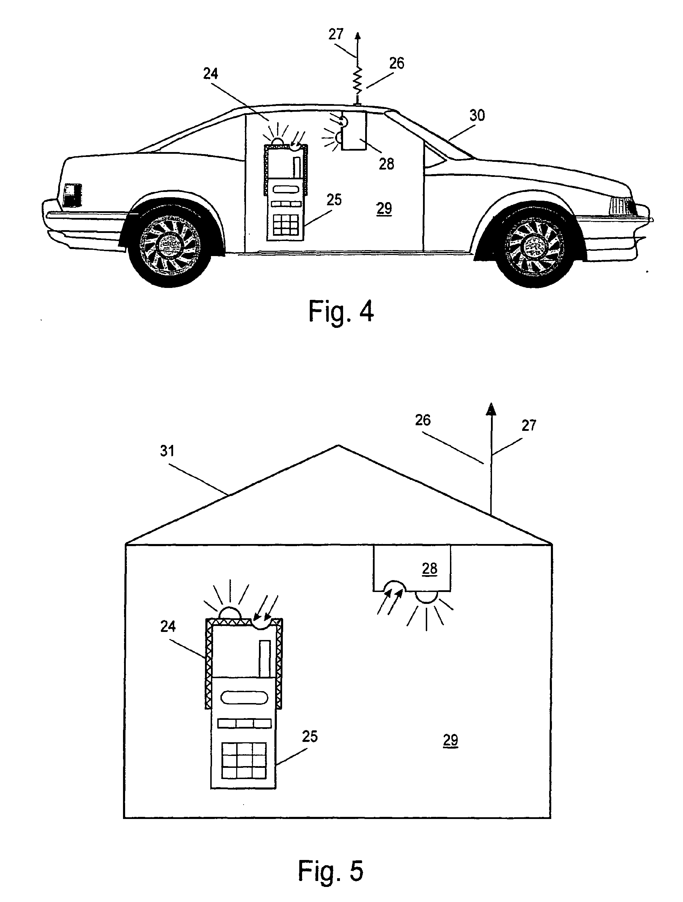

Beispiele für den Einsatz einer erfindungsgemäßen Anordnung in einem Fahrzeug 30 bzw. einem Gebäude 31 sind in den Figuren 4 bzw. 5 gezeigt. Dabei sind gleiche Teile mit gleichen Bezugsziffern bezeichnet. Die erfindungsgemäße Anordnung besteht aus einem mobilen Teil 24, nämlich einer auf ein Mobiltelefon 25 aufsetzbaren Abschirmvorrichtung mit einem Funkwellen-Infrarotumsetzer gemäß Figur 2, und einem stationären Teil 26. Das stationäre Teil 26 besteht aus einer Antenne 27 zur Erzeugung und zum Empfang von Funksignalen und einer Infrarotschnittstelle 28 zur Erzeugung und zum Empfang von Infrarotsignalen gemäß Figur 3. Diese Elemente sind so relativ zum Gebäude 31 bzw. zum Fahrzeug 30 angeordnet, daß Funkwellen mittels der Antenne 27 lediglich nach außen hin und nicht in den Innenraum 29 abgestrahlt werden. Vom Mobiltelefon 25 erzeugte Funkwellen werden mittels des mobilen Teils 25 abgechirmt und in Infrarotsignale umgesetzt. Indem die Funksignalquellen aus dem Innenraum 29 des Fahrzeugs 30 bzw. des Gebäudes 31 nach außen verlagert werden, kann die Funkwellenbelastung des Aufenthaltsbereichs eines Mobiltelefonnutzers reduziert werden. Insbesondere wird die beim Telefonieren erzeugte Funk-Sendeleistung vom Kopf des Nutzers abgeschirmt und erst davon beabstandet erzeugt. Da das vom Mobiltelefon erzeugte Funksignal schon in geringem Abstand von der Antenne empfangen und umgesetzt wird, kann die Sendeleistung des Mobiltelefons gegenüber dem normalen Mobilfunkbetrieb reduziert werden. Da die stationäre Einheit 26 über eine externe Energiequelle betrieben werden kann und sich die Funksignalquelle in einigem Abstand vom Nutzer befindet, muß bei der Bemessung der Funk-Sendeleistung der Einheit 26 nicht auf Batterieleistung und Belastung Rücksicht genommen werden. Somit lassen sich gegenüber dem normalen Mobilfunkbetrieb verbesserte Sendeeigenschaften erzielen.

### Gewerbliche Anwendbarkeit:

Die erfindungsgemäße Vorrichtung läßt sich als Zubehör zu handelsüblichen Mobiltelefonen vorteilhaft gewerblich einsetzen.

## Patentansprüche

1. Verfahren zur Verminderung der Belastung eines Mobiltelefon-Benutzers in einem Aufenthaltsbereich (29), insbesondere einem Fahrzeug-Innenraum oder einem Gebäude-Innenraum, durch elektromagnetische Strahlung im Funkwellenbereich,
**dadurch gekennzeichnet,**
**daß** vom Mobiltelefon (13, 25) ausgesendete elektromagnetische Strahlung im Funkwellenbereich mittels eines ersten Funkwellen-Infrarot-Umsetzers (16, 24) in elektromagnetische Strahlung im Infrarotbereich umgesetzt und ansonsten abgeschirmt wird,
und **daß** die von ersten Funkwellen-Infrarot-Umsetzer (16, 24) ausgesendete Infrarot-Strahlung mittels eines zweiten Funkwellen-Infrarot-Umsetzers (26), der am Rand des Aufenthaltsbereichs (29) angeordnet ist, in elektromagnetische Strahlung im Funkwellenbereich umgesetzt wird.

2. Verfahren nach Anspruch 1,
**dadurch gekennzeichnet,**
**daß** die vom zweiten Funkwellen-Infrarot-Umsetzer (26) ausgesendete Strahlung im Funkwellenbereich zum Aufenthaltsbereich (29) hin abgeschirmt wird.

3. Verfahren nach Anspruch 1 oder 2,
**dadurch gekennzeichnet,**
**daß** sich das vom Mobiltelefon (13, 25) und vom zweiten Funkwellen-Infrarot-Umsetzer (26) erzeugte Funksignal hinsichtlich ihres Informationsgehalts entsprechen.

4. Verfahren nach Anspruch 1, 2 oder 3,
**dadurch gekennzeichnet,**
**daß** von einer Sendestation ausgesendete elektromagnetische Strahlung im Funkwellenbereich mittels des zweiten Funkwellen-Infrarot-Umsetzers (26) in elektromagnetische Strahlung im Infrarotbereich umgesetzt, zum Mobiltelefon (13, 25) übertragen und dort mittels des ersten Funkwellen-Infrarot-Umsetzers (16, 24) in elektromagnetische Strahlung im Funkwellenbereich umgesetzt wird, welche vom Empfänger (14) des Mobiltelefons empfangen und ansonsten abgeschirmt wird.

5. Anordnung zur Verminderung der Belastung eines Mobiltelefon-Benutzers in einem Aufenthaltsbereich (29), insbesondere einem Fahrzeug-Innenraum oder einem Gebäude-Innenraum, durch vom Sender (14) eines Mobiltelefons (13, 25) ausgesendete elektromagnetische Strahlung im Funkwellenbereich,
**gekennzeichnet durch**
einen ersten Funkwellen-Infrarot-Umsetzer (16, 24), der in räumlicher Nähe zum Mobiltelefon angeordnet ist und vom Sender des Mobiltelefons ausgesendete elektromagnetische Strahlung im Funkwellenbereich (Funksignale) zu empfangen und in Infrarot-Signale umzusetzen imstande ist,
eine Abschirmeinrichtung (15), welche auf das Mobiltelefon aufsetzbar ist und Funksignale vom Mobiltelefon-Benutzer abzuschirmen imstande ist,
einen zweiten Funkwellen-Infrarot-Umsetzer (26), welcher am Rand des Aufenthaltsbereichs angeordnet ist und vom ersten Funkwellen-Infrarot-Umsetzer (16, 24) übertragene Infrarot-Signale zu empfangen und in Funksignale umzusetzen imstande ist,
wobei der erste Funkwellen-Infrarot-Umsetzer (16, 24) und/oder die Abschirmeinrichtung (15) derart mit dem Mobiltelefon verbindbar sind, daß Infrarot-Signale zum zweiten Funkwellen-Infrarot-Umsetzer (26) übertragbar sind.

6. Anordnung nach Anspruch 5,
**dadurch gekennzeichnet,**
**daß** die Infrarot-Übertragungsstrecke, die aus dem ersten und dem zweiten Funkwellen-Infrarot-Umsetzer gebildet ist, zur bidirektionalen Signalübertragung ausgelegt ist.

7. Anordnung nach Anspruch 5 oder 6,
**dadurch gekennzeichnet,**
**daß** der Aufenthaltsbereich (29) der Innenraum eines Fahrzeugs (30) ist und der zweite Funkwellen-Infrarot-Umsetzer eine Sende- und Empfangseinrichtung für Funksignale mit einer Antenne (27) aufweist, wobei die Antenne (27) an der Außenseite des Fahrzeugs (30) angeordnet ist, sowie einer Sende- und Empfangseinrichtung (28) für Infrarotsignale, die im Innenraum des Fahrzeugs angeordnet ist, aufweist.

8. Anordnung nach Anspruch 7,
**dadurch gekennzeichnet,**
**daß** die Antenne (27) die bereits vorhandene Fahrzeugantenne ist.

## Claims

1. Method for reducing the exposure of a mobile telephone user in an area of occupancy (29), in particular a passenger compartment of a motor vehicle or the interior of a building, to electromagnetic radiation in the radio frequency range, **characterized in that** electromagnetic radiation in the radio frequency range emitted by the mobile telephone (13, 25) is converted into electromagnetic radiation in the infrared range and is otherwise shielded by means of a first radio wave-to-infrared converter (16, 24), and **in that** the infrared radiation emitted by the first radio wave-to-infrared converter (16, 24), is converted into electromagnetic radiation in the radio frequency range by means of a second radio wave-to-infrared converter (26) located at the edge of the area of occupancy (29).

2. Method according to claim 1, **characterized in that** the radiation in the radio frequency range emitted by the second radio wave-to-infrared converter (26) is shielded with regard to the area of occupancy (29).

3. Method according to any one of claims 1 or 2, **characterized in that** the radio signals generated by the mobile telephone (13, 25) and by the second radio wave-to-infrared converter (26) correspond with respect to their information content.

4. Method according to any one of claims 1, 2 or 3, **characterized in that** electromagnetic radiation in the radio frequency range emitted by a transmitting station is converted into electromagnetic radiation in the infrared range by means of the second radio wave-to-infrared converter (26), transmitted to the mobile telephone (13, 25) and converted there by the first radio wave-to-infrared converter (16, 24) into electromagnetic radiation in the radio frequency range, which is received by the receiver (14) of the mobile telephone and otherwise shielded.

5. Arrangement for reducing the exposure of a mobile telephone user in an area of occupancy (29), in particular a passenger compartment of a motor vehicle or the interior of a building, to electromagnetic radiation in the radio frequency range emitted by the transmitter (14) of a mobile telephone (13, 25), **characterized by**
a first radio wave-to-infrared converter (16, 24) located in physical proximity to the mobile telephone and capable of receiving electromagnetic radiation in the radio frequency range (radio signals) transmitted by the transmitter of the mobile telephone and converting it into infrared signals,
a shielding device (15), which can be placed on the mobile telephone and is capable of shielding the mobile telephone user from radio signals,
a second radio wave-to-infrared converter (26), which is located at the edge of the area of occupancy and is capable of receiving infrared signals transmitted by the first radio wave-to-infrared converter (16, 24) and converting them into radio signals,
wherein the first radio wave-to-infrared converter (16, 24) and/or the shielding device (15) can be connected to the mobile telephone such that infrared signals can be transmitted to the second radio wave-to-infrared converter (26).

6. Arrangement according to claim 5, **characterized in that** the infrared transmission path composed of the first and the second radio wave-to-infrared converters is designed for bidirectional signal transmission.

7. Arrangement according to any one of claims 5 or 6, **characterized in that** the area of occupancy (29) is the passenger compartment of a motor vehicle (30), and the second radio wave-to-infrared converter has a transmitting and receiving device for radio signals with an antenna (27), wherein the antenna (27) is located on the outside of the vehicle (30), and said converter also has a transmitting and receiving device (28) for infrared signals located in the passenger compartment of the vehicle.

8. Arrangement according to claim 7, **characterized in that** the antenna (27) is the already existing vehicle antenna.

## Revendications

1. Procédé de réduction de l'exposition d'un utilisateur de téléphone mobile au rayonnement électromagnétique radioélectrique à l'intérieur d'une zone de séjour (29), notamment d'un habitacle de véhicule ou d'un immeuble,
**caractérisé en ce que**
le rayonnement électromagnétique radioélectrique émis par le téléphone mobile (13, 25) est transformé, au moyen d'un premier convertisseur radioélectrique/infrarouge (16, 24), en rayonnement électromagnétique infrarouge et, pour le reste, est blindé,
et **en ce que** le rayonnement infrarouge émis par le premier convertisseur radioélectrique/infrarouge (16, 24) est transformé en rayonnement électromagnétique radioélectrique au moyen d'un deuxième convertisseur radioélectrique/infrarouge (26) disposé en bordure de la zone de séjour (29).

2. Procédé selon la revendication 1,
**caractérisé en ce que**
la zone de séjour (29) est protégée par rapport au rayonnement radioélectrique émis par le deuxième convertisseur radioélectrique/infrarouge (26).

3. Procédé selon la revendication 1 ou 2,
**caractérisé en ce que**
le signal radioélectrique généré par le téléphone mobile (13, 25) et celui généré par le deuxième convertisseur radioélectrique/infrarouge (26) sont identiques quant à leur contenu informatif.

4. Procédé selon la revendication 1, 2 ou 3,
**caractérisé en ce que**
le rayonnement électromagnétique radioélectrique émis par une station émettrice est transformé en rayonnement électromagnétique infrarouge moyennant le deuxième convertisseur radioélectrique/infrarouge (26), puis transmis au téléphone mobile (13, 25) où il est transformé, au moyen du premier convertisseur radioélectrique/infrarouge (16, 24), en rayonnement électromagnétique radioélectrique qui est reçu par le récepteur (14) du téléphone mobile et, pour le reste, est blindé.

5. Dispositif pour la réduction de l'exposition d'un utilisateur de téléphone mobile au rayonnement électromagnétique radioélectrique émis par l'émetteur (14) d'un téléphone mobile (13, 25) à l'intérieur d'une zone de séjour (29), notamment d'un habitacle de véhicule ou un d'un bâtiment,
**caractérisé par**
un premier convertisseur radioélectrique/infrarouge (16, 24) disposé à proximité du téléphone mobile et apte à recevoir et à transformer en signaux infrarouges le rayonnement électromagnétique radioélectrique (signaux radioélectriques) émis par l'émetteur du téléphone mobile,
un dispositif de protection (15) pouvant être placé sur le téléphone mobile et apte à protéger l'utilisateur de téléphone mobile contre les signaux radioélectriques,
un deuxième convertisseur radioélectrique/infrarouge (26) disposé en bordure de la zone de séjour et apte à recevoir et à transformer en signaux radioélectriques les signaux infrarouges transmis par le premier convertisseur radioélectrique/infrarouge (16, 24),
le premier convertisseur radioélectrique/infrarouge (16, 24) et/ou le dispositif de protection (15) pouvant être reliés au téléphone mobile de manière telle à permettre la transmission des signaux infrarouges au deuxième convertisseur radioélectrique/infrarouge (26).

6. Dispositif selon la revendication 5,
**caractérisé en ce que**
le trajet de transmission infrarouge formé par le premier et le deuxième convertisseur radioélectrique/infrarouge est conçu pour une transmission bidirectionnelle des signaux.

7. Dispositif selon la revendication 5 ou 6,
**caractérisé en ce que**
la zone de séjour (29) est constituée par l'habitacle d'un véhicule (30) et le deuxième convertisseur radioélectrique/infrarouge comporte un dispositif d'émission et de réception pour signaux radioélectriques doté d'une antenne (27), l'antenne (27) étant disposée à l'extérieur du véhicule (30), ainsi qu'un dispositif d'émission et de réception (28) pour signaux infrarouges disposé dans l'habitacle du véhicule.

8. Dispositif selon la revendication 7,
**caractérisé en ce que**
l'antenne (27) est constituée par l'antenne déjà existante du véhicule.
